# EUROPEAN PATENT SPECIFICATION

(11) **EP 1 862 745 B1**
(45) Date of publication and mention of the grant of the patent: **08.07.2009**
(21) Application number: 06255211.2
(22) Date of filing: 10.10.2006
(51) Int. Cl.: F24F 11/00, F25B 13/00

(54) **Air conditioner**
Klimaanlage
Contitionneur d'air

(30) Priority: 31.05.2006 JP 2006150873
(43) Date of publication of application: 05.12.2007
(73) Proprietor: Hitachi Appliances, Inc., Minato-ku Tokyo (JP)
(72) Inventor: Kosugi, Shinichi, Shimizu-ku Shizuoka-shi Shizuoka (JP); Oishi, Kenichi, Shimizu-ku Shizuoka-shi Shizuoka (JP); Yoshida, Yasutaka, Shimizu-ku Shizuoka-shi Shizuoka (JP); Hata, Yoshiki, Shimizu-ku Shizuoka-shi Shizuoka (JP); Sano, Nobuhiro, Shimizu-ku Shizuoka-shi Shizuoka (JP)
(74) Representative: Calderbank, Thomas Roger

(56) References cited:
- EP-A- 1 496 317
- EP-A- 1 605 214
- GB-A- 2 289 124
- JP-A- 1 312 345
- JP-A- 6 050 591

## Description

The present invention relates to an air conditioner comprising a combination of a single indoor unit and a single outdoor unit, and to an air conditioner comprising a combination of a plurality of indoor units and a single outdoor unit.

In an air conditioner, the control of the temperature of air blown into a room has been conventionally carried out so that the temperature of air in the room is closer to a preset temperature. For example, an operation control has been carried out, which comprises the steps of detecting the temperature of air sucked into the room by a temperature sensor, and restarting the operation when a difference between the temperature of air sucked into the room and the preset temperature is increased. In an air conditioner provided with an inverter, the frequency of a compressor is lowered when a difference between a temperature of air sucked into a room and a preset temperature is decreased. On the other hand, when the difference is increased, the frequency is increased.

For example, JP-A-6-50591 can be given as a prior art example. The technique in this document is as follows: a target temperature of air blown is determined from a difference between a preset room temperature and a measured room temperature, a preset wind speed and the type of an indoor unit; an air-conditioning index is calculated from the target temperature of air blown and a measured temperature of air blown, and the frequency of a compressor is controlled based on the air-conditioning index. JP-A-1-312345 describes an air conditioner in which a preset temperature useful to change the rotational speed of an outdoor fan in accordance with the operational frequency of a capability-variable compressor can be varied.

In the prior art, an approximate target temperature of air blown into the room could be achieved by only the control of the frequency of the compressor. However, the prior art suffers from the following problem: During a cooling operation under a temperature condition in which an air-conditioning load is smaller, for example, at a temperature of outside air of about 20°C, the temperature of air blown is extremely lowered due to a drop in temperature of a pipe in an indoor unit, resulting in a detraction in comfortableness due to a cold-wind feeling about the air blown. In a multi-unit air conditioner, the following problem is encountered: When a number of indoor units such as one to three is being operated and each of the indoor units has smaller capacity, the amount of a coolant circulated is excessively increased due to the capacity of the indoor unit being too small as compared with an outdoor unit, and hence, the temperature of air blown is extremely lowered, resulting in a detraction in comfortableness.

GB-A-2289124 discloses an air conditioner with indoor and outdoor units and air blowers for those units. There are also indoor and outdoor temperature sensors. When the outdoor temperature sensor detects a change in temperature, the speed of rotation of the air blower of the outdoor unit is changed.

According to the present invention there is provided an air conditioner comprising an outdoor unit including a compressor, a four-way valve, an outdoor heat exchanger and an outdoor expansion valve, and an indoor unit including an indoor unit including an indoor heat exchanger and an indoor expansion valve, a refrigerating cycle being formed by connecting said compressor, said four-way valve, said outdoor heat exchanger, and said indoor expansion valve to one another by coolant pipes; and further, an air blower for the outdoor unit, an air blower for the indoor unit, an indoor blown-air temperature sensor and an outdoor outside air temperature sensor;
characterised in that:
the air blower said outdoor unit has a plurality of rotational - speeds, between a minimum and a maximum, and is arranged to operate at a range of rotational speeds between said maximum and a lower limit, said lower limit being variable in dependence on the temperature as the temperature of the outside air outside the room detected by said outdoor air temperature sensor, and said air conditioner being arranged to lower said lower limit towards said minimum when the temperature of the air outside the room lowers.

The present invention enables an air conditioner to be produced which capable of ensuring a comfortableness, wherein the temperature of air blown out of the air conditioner is prevented from being excessively lowered.

In the arrangement, it is desirable that the operational frequency of the compressor is lowered, when the rotational speed of the air blower for the outdoor unit is reduced.

Further, in the above arrangement, it is desirable that the air conditioner includes an indoor sucked-air temperature sensor, so that the operation of the indoor unit is controlled in an on/off manner by determining a preset temperature of the indoor unit in accordance with a temperature of air blown into a room and detected by the indoor blown-in air temperature sensor and a temperature of air sucked into the room and detected by the indoor sucked-air temperature sensor.

Furthermore, it is desirable that when the temperature of air blown into the room has been lowered to a predetermined temperature or less, the operation of the indoor unit is stopped.

Yet further, in the above arrangement, it is desirable that the speed of increasing of the operational frequency of the compressor at the start of the cooling operation is controlled in accordance with the temperature of air blown into the room.

Further, in the above arrangement, it is desirable that the speed of increasing of the operational frequency of the compressor at the start of the cooling operation is set at a value equal to or lower than 0.5 Hz/s.

Further, in the above arrangement, it is desirable that the rotational speed of the air blower for the indoor unit is controlled in accordance with the temperature of air blown into the room.

### IN THE DRAWINGS:

Fig. 1 is an illustration showing an arrangement of a refrigerating cycle in an embodiment of the present invention.
Fig. 2 is a diagram showing one example of the control of an air blower for an outdoor unit during a cooling operation of an air conditioner.
Fig. 3 is a diagram showing one example of a flow chart for the control of the air blower during the cooling operation of the air conditioner.
Fig. 4 is a diagram showing one example of the control of the air blower for the indoor unit during the cooling operation of the air conditioner.

In the prior art, the frequency of the compressor is only controlled for the purpose of providing a target blown-air temperature, but the present invention is largely different from the prior art in respect of that a target temperature of air blown into a room is realized not only by the control the frequency of a compressor but also by a complex combination of controls of a rotational speed of an air blower for an outdoor unit, the opening of an indoor expansion valve, the turning-on/off of a solenoid valve and the like.

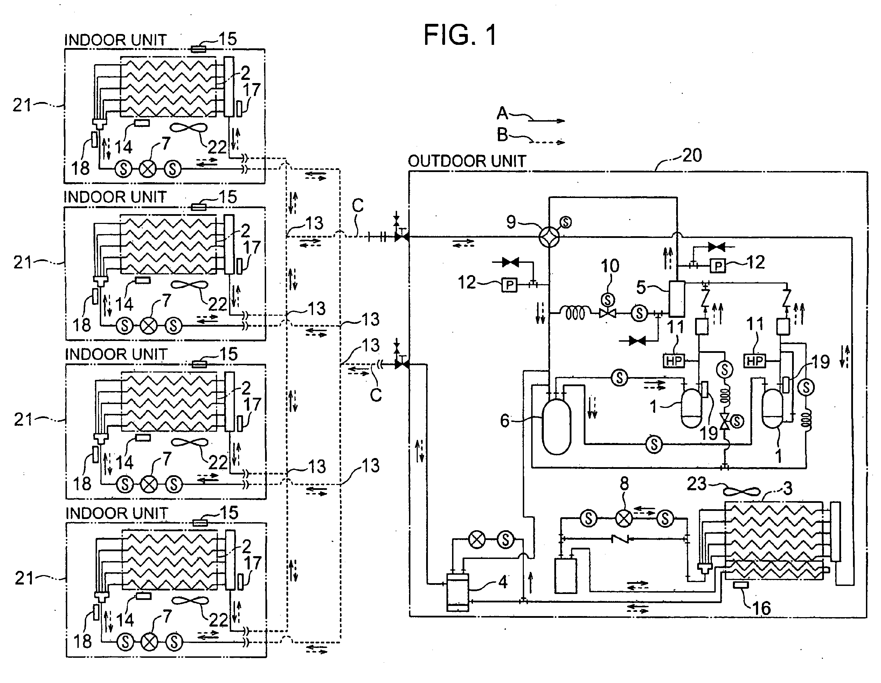

The arrangement of an air conditioner according to the present invention will now be described. Fig. 1 is an illustration of a refrigerating cycle system of a multi-unit air conditioner given as one example of an air conditioner. The multi-unit air conditioner is comprised of one outdoor unit 20 and a single or a plurality of indoor units 21, so that a refrigerating cycle is constituted by coolant pipes C. The outdoor unit 20 is comprised of a single or a plurality of compressors 1, an oil separator 5 for separating a refrigerator oil from a coolant, a four-way valve 9, an outdoor heat exchanger 3, a outdoor expansion valve 8, a receiver 4 for receiving a liquid coolant, and a gas-liquid separating accumulator 6. In a case where a plurality of indoor units are connected, the coolant is dispensed into the individual indoor units by means of branch pipes 13. An indoor air blower 22 is mounted on a suction side of the indoor heat exchanger 2, and an outdoor air blower 23 is mounted on a suction side of an outdoor heat exchanger. A compressor upper portion temperature sensor 19 for detecting a compressor temperature is mounted at an upper portion of the compressor 1, and an outdoor sucked-air temperature sensor 16 is mounted on a suction side of the outdoor heat exchanger 3, so that these sensors are used for a cycle control. There are also a sucked-air temperature sensor 14 mounted on a suction side of the indoor heat exchanger 2, a blown-air temperature sensor 15 mounted on a blowing-out side of the indoor heat exchanger 2, and an indoor gas pipe temperature sensor 17 and an indoor liquid pipe temperature sensor 18 mounted on pipes, these sensors being used for the cycle control. Main causes for the excessively low indoor blown-air temperature in the multi-unit air conditioner will be described below. In the case of the multi-unit air conditioner, the one indoor unit 21 or a plurality of the indoor units 21 may be operated depending on the loaded situations and the temperature situations in respective rooms. When a smaller number of the indoor units 21 such as one or two or three indoor units are operated, or when the capacity of the indoor unit or units 21 operated is smaller, the balance between the indoor-side capacity and the outdoor-side capacity is degraded due to the smaller capacity of the indoor unit 21 than that of the outdoor unit 20 and as a result, the cooling capability is liable to be excessive. In such a case, a reduction in the excessive cooling capability can be provided by reducing the operational frequency of the compressor 1 to reduce the amount of coolant circulated, but it may be impossible in some cases to regulate the balance between the indoor-side capacity and the outdoor-side capacity merely by reducing the frequency of the compressor 1. In such a case, the cooling capability of the indoor unit 21 is excessive and as a result, the temperature of the air blown into the room is remarkably lowered to cause a cold-wind feeling. Even when a plurality of the indoor units 21 are operated, the coolant may be concentratedly supplied into a particular indoor unit 21 in some cases, resulting in remarkable lowering of the temperature of the air blown into the room. A specific control method for preventing the temperature of the air blown out of the indoor unit 21 of the air conditioner from being excessively lowered will be described below.

A first method for preventing the lowering of the temperature of the air blown into the room includes a technique for controlling the rotational speed of the air blower for the outdoor unit in accordance with the temperature of the air blown into the room, the temperature of outside air outside the room and the operational frequency of the compressor.

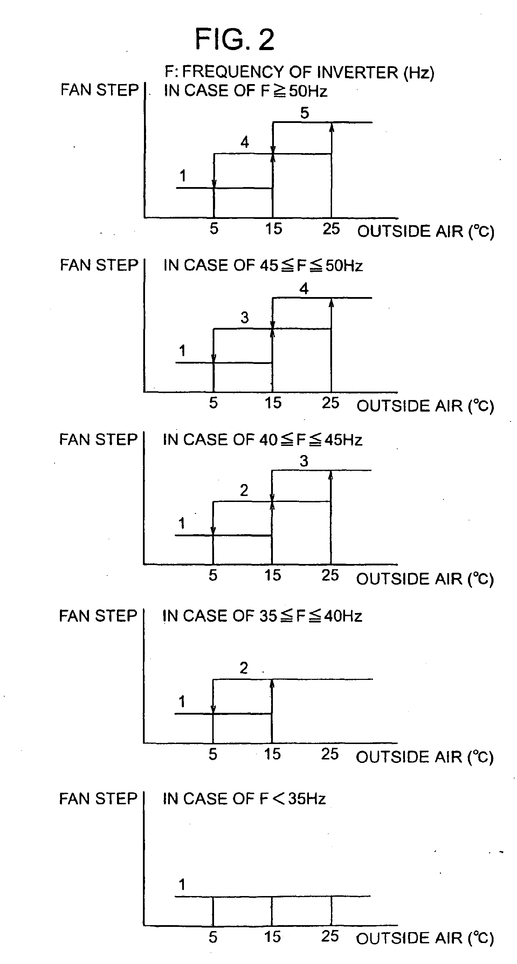

Fig. 2 shows one example of the control of the air blower for the outdoor unit during the cooling operation of the air conditioner. Numerals in Fig. 2 indicate fan steps of the air blower for the outdoor unit. In the air blower for the outdoor unit, fan steps of from a step of 0 to a step of 16 are provided, wherein the minimum rotational speed is defined as the step of 0, and the maximum rotational speed is defined as the step of 16, so that the air blower can be controlled to the rotational speeds of 16 stages.

In the usual control during the cooling operation of the air conditioner, the pressure discharged from the compressor 1 is detected by a pressure sensor 12, and the rotational speed of the air blower for the outdoor unit is controlled so that the discharged pressure is equal to a target pressure. In the case of the multi-unit air conditioner, the number of indoor units 21 operated may be changed and hence, it is intended to ensure that the pressure load from the compressor 1 is always maintained constant even if such change occurs.

A lower limit for the fan step is determined by the outdoor temperature in addition to controlling the discharged pressure constant. When the outdoor temperature is as high as equal to or higher than 25°C, the pressure discharged from the compressor 1 is raised and hence, the lower limit for the fan step of the outdoor air blower is increased to suppress the raising of the discharged pressure. On the other hand, when the outdoor temperature is as low as equal to or lower than 5°C, the pressure discharged from and the pressure sucked into the compressor 1 are lowered and hence, the lower limit for the fan step of the outdoor air blower is decreased to suppress the excessive lowering of the temperature of air blown out of the indoor unit 21 into the room due to the lowering of the pressure discharged from and the pressure sucked into the compressor 1.

More specifically, in a case where the operational frequency of the compressor 1 is equal to or higher than 50 Hz, when the temperature of the outside air is raised to reach equal to or higher than 15°C, the lower limit for the fan step is increased from the fan step of 1 to the fan step of 4. When the temperature of the outside air is further raised to reach equal to or higher than 25°C, the lower limit for the fan step is increased to the fan step of 5. On the other hand, when the temperature of the outside air is lowered to reach equal to or lower than 5°C, the lower limit for the fan step is decreased to the fan step of 1.

Further, the operational frequency of the compressor 1 is classified into a range of 45 to 50 Hz, a range of 40 to 45 Hz, a range of 35 to 40 Hz and a range of 35 Hz to lower, and a lower limit table for the fan steps is determined in accordance with the operational frequency of the compressor 1. At any operational frequency, the lower limit for the fan step is defined to be lower according as the temperature of the outside air is lower. It should be noted that when the operational frequency of the compressor 1 is equal to or higher than 35 Hz, the lower limit for the fan step is determined to be always equal to the fan step of 1 irrespective of the temperature of the outside air.

By determining the lower limit for the fan step as described above and by carrying out the control of the air blower for the outdoor unit, so that the lower limit for the fan step is as lower as possible, the temperature of the air blown out of the indoor unit 21 into the room from being excessively lowered due to a reduction in pressure sucked into the compressor 1.

According to the present embodiment, the amount of coolant circulated in the cycle can be reduced, and the temperature of air blown can be prevented from being excessively lowered.

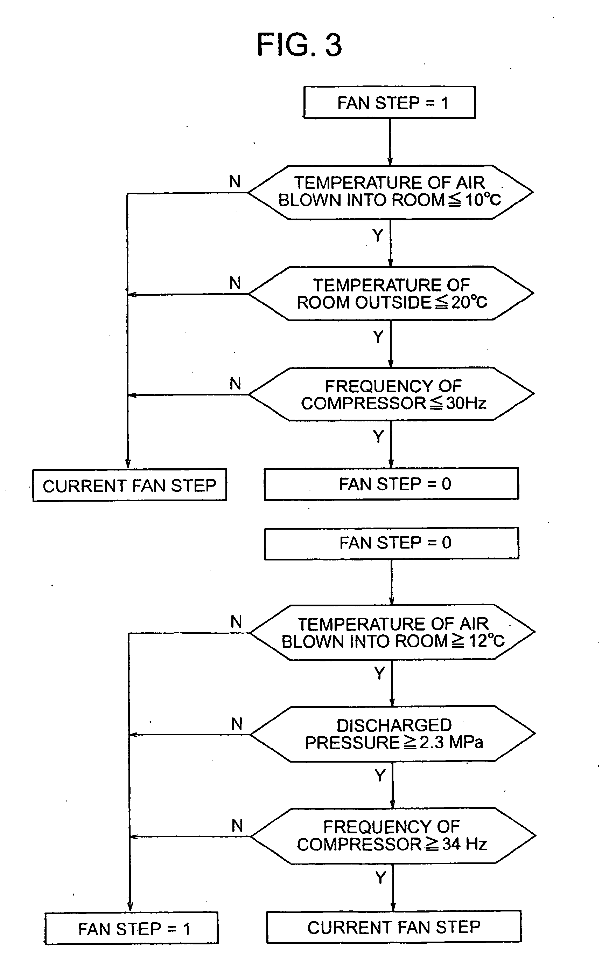

Fig. 3 shows one example of a flow chart for controlling the air blower during cooling operation of the air conditioner. In a state at the fan step of 1, , when lowest one of temperatures of air blown out of the plurality of indoor units is equal to or lower than 10°C with an outdoor temperature equal to or lower than 20°C, and the operational frequency of the compressors 1 is equal to or lower than 30 Hz, the temperature of air blown out of the indoor unit 21 into the room can be prevented from excessively lowered due to the reduction in pressure sucked into the compressor 1 by shifting the state to a state at the fan step of 0.

In a state at the fan step of 1, when the lowest one of temperatures of air blown out of the plurality of indoor units is equal to or higher than 12°C, or the temperature of air discharged from the compressor 1 is equal to or higher than 2.3 MPa, or the operational frequency of the compressor 1 is equal to or higher than 34 Hz, the raising of the pressure discharged from the compressor 1 can be suppressed by returning the state to a state at the fan step of 1.

During the cooling operation, and particularly under the condition of the lower temperature of the outside air, if the amount of air blown by the air blower in the outdoor unit 20 is larger, the pressure discharged from the compressor 1 is dropped, and the temperature of air blown out of the indoor unit 21 is lowered due to a reduction in temperature of the indoor heat exchanger. To prevent this lowering of the temperature of air blown, the fan step of the air blower of the outdoor unit 20 described above may be reduced, i.e., the rotational speed of the air blower may be reduced, or the fan step may be reduced to the fan step of 0. In this manner, the problem of this lowering of the temperature can be solved. However, if the fan step is reduced to the fan step of 0, or the rotational speed of the air blower is reduced down to 0, the pressure discharged from the compressor 1 is abnormally raised. For this reason, it is essential to satisfy the above-described temperature condition or the like.

A second method for preventing the temperature of air blown into the room from being excessively lowered includes a technique for controlling the rotational speed of the air blower for the indoor unit and the wind direction of a blown-air direction adjusting louver in accordance with the temperature of air blown into the room. When the temperature of air blown out of the indoor unit 21 into the room has been lowered to 10°C or less, the temperature of air blown into the room can be raised by increasing the rotational speed of the air blower for the indoor unit to increase the amount of air flowing into the room. Again, when the temperature of air blown out of the indoor unit 21 into the room has been lowered to 10°C or less, the air blown into the room and having the lower temperature can be prevented from being blown directly against a person by changing the wind direction of the blown-air direction adjusting louver mounted on the indoor unit 21 for the air blown into the room to an upward blowing direction, and thus, it is possible to prevent a cold-wind feeling. In addition, it is possible to suppress the excessive lowering of the temperature of air blown into the room to prevent the cold-wind feeling by a method comprising a combination of the above-described two methods, i.e., by automatically changing the rotational speed of the air blower for the indoor unit and the wind direction of the blown-air direction adjusting louver in accordance with the temperature of air blown into the room. According to the present embodiment, it is possible to reduce the amount of coolant circulated in the indoor unit during operation of the air conditioner and to prevent the temperature of air blown from being excessively lowered. However, as compared with the method shown in Fig. 2, there is a possibility that a flowing sound (abnormal sound) of the coolant may be generated, because the coolant flows even into the indoor unit which is in suspension.

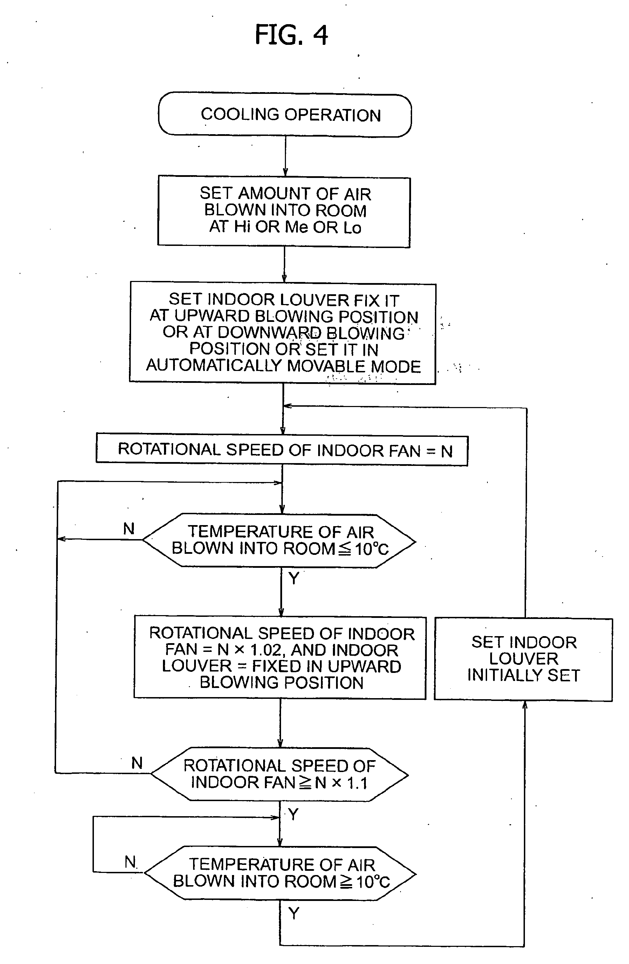

For a specific example, Fig. 4 shows one example of a flow chart for controlling the air blower for the indoor unit during the cooling operation of the air conditioner. If the temperature of air blown out of the indoor unit 21 into the room is lowered to 10°C or lower under a condition in which the amount of air into the room has been set at any of Hi (a high volume), Me (a medium volume) and Lo (a low volume) and the indoor louver has been fixed in an upward blowing position or a downward blowing position, or set in an automatically vertically movable mode, then the rotational speed of the indoor air blower is increased by 2%. At that time, the indoor louver is set in the upward blowing position in order to prevent the wind from being blown against a person staying in the room due to an increased speed of air blown into the room. Nevertheless, if the temperature of air blown into the room is not raised, then the rotational speed is further increased by 2%. The rotational speed may be increased by a maximum of 10%. The reason why the upper limit is provided is that the air blowing noise value is increased due to an increase in rotational speed. If the temperature of air blown into the room is restored to 10°C or higher, the setting of the amount of air blown into the room and the setting of the indoor louver are retuned to the original settings.

A third method for preventing the temperature of air blown into the room from being excessively lowered includes a technique for controlling the operation of the indoor unit 21 in an on/off manner by determining the preset temperature of the indoor unit 2 as desired in accordance with the temperature of air blown out of the indoor unit 21 and the temperature of air blown into the room. The operation of the indoor unit 21 is stopped at a time point when the temperature of air blown into the room is lowered to the preset temperature during the cooling operation, but if the operation of the indoor unit 21 is a little early stopped even if the temperature of air blown into the room is not lowered to the preset temperature, it is possible to prevent the comfortableness from being detracted due to the cold-wind feeling and to prevent the temperature of air blown into the room from being excessively lowered.

More specifically, when the temperature of air blown out of the indoor unit into the room is equal to or lower than 10°C and satisfies a condition of the temperature of air blown into the room ≤ the preset indoor temperature + A°C, the operation of the indoor unit is stopped. In the above expression, a value of A is a value determined as desired in accordance with the temperature of air sucked into the indoor unit 21, the temperature of air blown into the room and the temperature of the outside air in the outdoor unit 20. The adjustment of this value makes it possible to prevent the temperature of air blown into the room from being excessively lowered due to the excessive cooling during the cooling operation, and to prevent the comfortableness from being detracted due to the cold-wind feeling.

A fourth method for preventing the lowering of the temperature of air blown into the room includes a technique for controlling the speed of increasing of the operational frequency of the compressor at the start of the cooling operation in accordance with the temperature of air blown into the room. At the start of the cooling operation, the speed of increasing of the operational frequency of the compressor 1 is set at a value as high as possible, so that the temperature of air blown into the room is lowered to a target room temperature. However, the quickly lowering of the room temperature causes a difference between the temperature in the room and the temperature of air blown into the room to be increased and as a result, the comfortableness may be detracted in some cases due to the cold-wind feeling. In order to improve the comfortableness, the cold-wind feeling can be suppressed by lowering the speed of increasing of the operational frequency of the compressor 1. For example, it is desirable that the speed of increasing of the operational frequency of the compressor, which is usually on the order of 3.0 Hz/s, is lowered to 0.5 Hz/s or less at the start of the cooling operating. It should be noted that an effect of reducing the electric power consumed and reducing the electric power consumed per year can be expected by lowering the speed of increasing of the operational frequency of the compressor in accordance with the difference between the preset temperature of the indoor unit 21 and the temperature of air blown into the room.

According to each of the above-described techniques, it is possible to prevent the temperature of air blown out of the indoor unit 21 from being excessively lowered, thereby realizing a comfortable air-conditioning. Even one of these techniques is effective, and even a combination of a plurality of the techniques can provide an effect of preventing the temperature of air blown out of the indoor unit 21 from being excessively lowered.

According to the above-described embodiment of the present invention, the temperature of the outside air outside the room is detected by the outdoor outside air temperature sensor, and if the temperature of the outside air is lowered, the rotational speed of the air blower for the outdoor unit is lowered. In addition, the minimum rotational speed of the air blower for the outdoor unit is determined in accordance with the operational frequency of the compressor and the temperature of the outside air, so that the rotational speed of the air blower for the outdoor unit is more lowered according as the operational frequency of the compressor for the outdoor unit is lower, and the rotational speed of the air blower for the outdoor unit is more lowered according as the temperature of the outside air is lower. During operation of the air conditioner, the rotational speed of the air blower for the outdoor unit may be reduced to 0 (zero) depending on conditions of the temperature of air blown into the room, the discharged pressure and the operational frequency of the compressor. With respect to the indoor unit, the temperature air blown out of which has been lowered, among the plurality of indoor units connected together, the opening of the indoor expansion valve is controlled so as to be throttled.

## Claims

1. An air conditioner comprising an outdoor unit (20) including a compressor (1), a four-way valve (9), an outdoor heat exchanger (3) and an outdoor expansion valve (8), and an indoor unit including an indoor unit (21) including an indoor heat exchange (2) and an indoor expansion valve, a refrigerating cycle being formed by connecting said compressor (1), said four-way valve (9), said outdoor heat exchanger (2), and said indoor expansion valve to one another by coolant pipes; and further, an air blower (23) for the outdoor unit (20), an air blower (22) for the indoor unit (21), an indoor blown-air temperature sensor (15) and an outdoor outside air temperature sensor (16);
**characterised in that**:
the air blower (23) said outdoor unit (20) has a plurality of rotational speeds, between a minimum and a maximum, and is arranged to operate at a range of rotational speeds between said maximum and a lower limit, said lower limit being variable in dependence on the temperature as the temperature of the outside air outside the room detected by said outdoor air temperature sensor (16), and said air conditioner being arranged to lower said lower limit towards said minimum when the temperature of the air outside the room lowers.

2. An air conditioner according to claim 1, wherein the operational frequency of said compressor when it is reduced to a predetermined frequency a lower limit of the rotational speed of said air blower (23) for said outdoor unit (20) is lowered.

3. An air conditioner according to claim 1, further including an indoor sucked-air temperature sensor (14) and an indoor blown-air temperature sensor (15), so that the operation of said indoor unit is controllable in an on/off manner by determining a preset temperature in accordance with temperature of air blown into a room and detected by said indoor blown-air temperature sensor (15) and a temperature of air sucked into the room and detected by said indoor sucked-air temperature sensor (14).

4. An air conditioner according to claim 3, wherein, when said temperature of air blown into the room has been lowered to a predetermined temperature or less, the operation of said indoor unit (21), is arranged to be stopped.

5. An air conditioner according to claim 1, wherein the speed of increasing of the operational frequency of said compressor at the start of the cooling operation is controllable in accordance with said temperature of air blown into the room.

6. An air conditioner according to claim 1, wherein the speed of increasing of the operational frequency of said compressor (1) at the start of the cooling operation is set at a value equal to or lower than 0.5 Hz/s.

7. An air conditioner according to claim 1, wherein the rotational speed of said air blower (22) for said indoor unit (21) is controllable in accordance with said temperature of air blown into the room.

8. An air conditioner according to claim 1, wherein the wind direction of a blown-air direction adjusting louver mounted in said indoor unit (21) is controllable in accordance with said temperature of air blown into the room.

## Patentansprüche

1. Klimaanlage mit einer Freilufteinheit (20), die einen Kompressor (1), ein Vierwegeventil (9), einen Freiluft-Wärmetauscher (3) und ein Freiluft-Entspannungsventil (8) enthält, und einer Innenraumeinheit (21), die einen Innenraum-Wärmetauscher (2) und ein Innenraum-Expansionsventil enthält, wobei durch wechselseitige Verbindung des Kompressors (1), des Vierwegeventils (9), des Freiluft-Wärmetauschers (2) und des Innenraum-Expansionsventils mittels Kühlmittelleitungen ein Kühlkreis gebildet wird, sowie mit einem Luftgebläse (23) für die Freilufteinheit (20), einem Luftgebläse (22) für die Innenraumeinheit (21), einem Innenraumgebläseluft-Temperatursensor (15) und einem Freiluft-Temperatursensor (16) für die Außenluft,
**dadurch gekennzeichnet, dass**
das Luftgebläse (23) der Freilufteinheit (20) zwischen einem Minimum und einem Maximum mehrere Drehgeschwindigkeiten aufweist und eingerichtet ist, zwischen dem Maximum und einer Untergrenze in einem Bereich von Drehgeschwindigkeiten zu arbeiten, wobei die Untergrenze in Abhängigkeit von der Temperatur als der vom Freiluft-Temperatursensor (16) erfassten Temperatur der Außenluft außerhalb des Raums veränderbar ist und die Klimaanlage eingerichtet ist, die Untergrenze in Richtung zum Minimum hin abzusenken, wenn die Lufttemperatur außerhalb des Raums sinkt.

2. Klimaanlage nach Anspruch 1, wobei eine Untergrenze der Drehgeschwindigkeit des Luftgebläses (23) der Freilufteinheit (20) gesenkt wird, wenn die Betriebsfrequenz des Kompressors auf eine vorbestimmte Frequenz gesenkt wird.

3. Klimaanlage nach Anspruch 1 mit einem Innenraumansaugluft-Temperatursensor (14) und einem Innenraumblasluft-Temperatursensor (15), so dass der Betrieb der Innenraumeinheit in Ein-/Aus-Art gesteuert werden kann, indem eine vorgegebene Temperatur entsprechend der vom Innenraumblasluft-Temperatursensor (15) erfassten Temperatur von in einen Raum geblasener Luft und einer vom Innenraumansaugluft-Temperatursensor (14) erfassten Temperatur von in den Raum gesaugter Luft bestimmt wird.

4. Klimaanlage nach Anspruch 3, wobei der Betrieb der Innenraumeinheit (21) eingerichtet ist, angehalten zu werden, wenn die Temperatur der in den Raum geblasenen Luft auf eine vorbestimmte Temperatur oder weniger abgesunken ist.

5. Klimaanlage nach Anspruch 1, wobei die Geschwindigkeit der Zunahme der Betriebsfrequenz des Kompressors am Beginn des Kühlbetriebs entsprechend der Temperatur der in den Raum geblasenen Luft steuerbar ist.

6. Klimaanlage nach Anspruch 1, wobei die Geschwindigkeit der Zunahme der Betriebsfrequenz des Kompressors (1) bei Beginn des Kühlbetriebs auf einen Wert von 0,5 Hz/s oder weniger festgelegt ist.

7. Klimaanlage nach Anspruch 1, wobei die Drehgeschwindigkeit des Luftgebläses (22) für die Innenraumeinheit (21) entsprechend der Temperatur der in den Raum geblasenen Luft steuerbar ist.

8. Klimaanlage nach Anspruch 1, wobei die Strömungsrichtung einer in der Innenraumeinheit (21) angebrachten Lüftungsöffnung, die die Blasluftrichtung einstellt, entsprechend der Temperatur der in den Raum geblasenen Luft steuerbar ist.

## Revendications

1. Climatiseur comportant une unité extérieure (20) incluant un compresseur (1), une vanne à quatre voies (9), un échangeur de chaleur extérieur (3) et un détendeur extérieur (8), et une unité intérieure comportant une unité intérieure (21) incluant un échangeur de chaleur intérieur (2) et un détendeur intérieur, un cycle de réfrigération étant formé en connectant ledit compresseur (1), ladite vanne à quatre voies (9), ledit échangeur de chaleur extérieur (2), et ledit détendeur intérieur les uns aux autres par l'intermédiaire de conduits caloporteurs et, de plus, un ventilateur (23) pour l'unité extérieure (20), un ventilateur (22) pour l'unité intérieure (21), une sonde intérieure de température d'air soufflé (15) et une sonde extérieure de température d'air extérieur (16), **caractérisé en ce que** :
le ventilateur (23) pour ladite unité extérieure (20) a une pluralité de vitesses de rotation, comprises entre un minimum et un maximum, et est conçu pour fonctionner dans une plage de vitesses de rotation comprise entre ledit maximum et une limite inférieure, ladite limite inférieure étant variable en fonction de la température telle que la température de l'air extérieur à l'extérieur de la pièce détectée par ladite sonde de température d'air extérieure (16), et ledit climatiseur étant conçu pour abaisser ladite limite inférieure vers ledit minimum lorsque la température de l'air à l'extérieur de la pièce diminue.

2. Climatiseur selon la revendication 1, dans lequel, lorsque la fréquence opérationnelle dudit compresseur est réduite à une fréquence prédéterminée, une limite inférieure de la vitesse de rotation dudit ventilateur (23) pour ladite unité extérieure (20) est réduite.

3. Climatiseur selon la revendication 1, incluant en outre une sonde intérieure de température d'air aspiré (14) et une sonde intérieure de température d'air soufflé (15), de sorte que le fonctionnement de ladite unité intérieure peut être commandé par mise sous tension/hors tension en déterminant une température prédéfinie conformément à la température de l'air soufflé dans une pièce et détectée par ladite sonde intérieure de température d'air soufflé (15) et une température de l'air aspiré dans la pièce et détectée par ladite sonde intérieure de température d'air aspiré (14).

4. Climatiseur selon la revendication 3, dans lequel, lorsque ladite température de l'air soufflé dans la pièce a été ramenée à une température prédéterminée ou inférieure, ladite unité intérieure (21) est conçue pour arrêter de fonctionner.

5. Climatiseur selon la revendication 1, dans lequel la vitesse d'augmentation de la fréquence opérationnelle dudit compresseur au début de l'opération de refroidissement peut être commandée conformément à ladite température de l'air soufflé dans la pièce.

6. Climatiseur selon la revendication 1, dans lequel la vitesse d'augmentation de la fréquence opérationnelle dudit compresseur (1) au début de l'opération de refroidissement est définie à une valeur égale ou inférieure à 0,5 Hz/s.

7. Climatiseur selon la revendication 1, dans lequel la vitesse de rotation dudit ventilateur (22) pour ladite unité intérieure (21) peut être commandée conformément à ladite température de l'air soufflé dans la pièce.

8. Climatiseur selon la revendication 1, dans lequel la direction du vent d'un volet de réglage de la direction de l'air soufflé monté dans ladite unité intérieure (21) peut être commandée conformément à ladite température de l'air soufflé dans la pièce.
